# EUROPEAN PATENT APPLICATION

(11) **EP 4 280 764 A1**
(43) Date of publication of application: **22.11.2023**
(21) Application number: 23172559.9
(22) Date of filing: 10.05.2023
(51) Int. Cl.: H04W 72/0453, H04W 88/10, H04W 48/08, H04W 76/15, H04W 84/12, H04W 52/02, H04W 16/14

(54) **METHOD FOR PERFORMING CHANNEL USAGE MANAGEMENT WITH AID OF MULTI-LINK OPERATION ARCHITECTURE, AND ASSOCIATED APPARATUS**

(30) Priority: 17.05.2022 US 202263342644 P; 03.05.2023 US 202318142586
(71) Applicant: MediaTek Inc., Hsin-Chu 300 (TW)
(72) Inventor: GUO, Ming-Wang, Hsinchu City 30078 (TW)
(74) Representative: Hoefer & Partner Patentanwälte mbB

(57) **Abstract**

A method for performing channel usage management with aid of multi-link operation architecture and associated apparatus are provided. The method applicable to a wireless transceiver device within a wireless communications system may include: utilizing the wireless transceiver device to communicate with another device within the wireless communications system through at least one portion of multiple links respectively corresponding to multiple predetermined radio frequency bands (S70); and at first time point when radar is detected in a first channel used by a first link among the multiple links, starting performing a first procedure to make channel management information be received by the other device via one or more other links among the multiple links at any time point when the other device is ready to receive the channel management information (S71), wherein the other device is not ready to receive the channel management information at the first time point.

## Description

### Cross Reference to Related Applications

This application claims the benefit of U.S. Provisional Application No. 63/342,644, filed on May 17th, 2022. The content of the application is incorporated herein by reference.

### Background

The present invention is related to communications control, and more particularly, to a method for performing channel usage management with aid of multi-link operation (MLO) architecture, and associated apparatus such as an access point (AP) device and a station (STA) device.

According to the related art, a wireless communications device of a wireless local area network (WLAN) may operate in a predetermined radio frequency band. Some problems may occur, however. For example, the predetermined radio frequency band may comprise at least one portion of a radio frequency band used by a radar system. When the radar system is operating, it may be needed to limit or change the way of using the predetermined radio frequency band, causing overall performance to be reduced. Although some suggestions may be proposed to try solving the problem, there may be additional problems such as some side effects. Thus, a novel method and associated architecture are needed for solving the problems without introducing any side effect or in a way that is less likely to introduce a side effect.

### Summary

It is an objective of the present invention to provide a method for performing channel usage management with aid of MLO architecture, and associated apparatus such as an AP device and a STA device, in order to solve the above-mentioned problems. A method and a wireless transceiver device according to the invention are defined in the independent claims. The dependent claims define preferred embodiments thereof.

At least one embodiment of the present invention provides a method for performing channel usage management with aid of MLO architecture, where the method can be applied to a wireless transceiver device within a wireless communications system. For example, the method may comprise: utilizing the wireless transceiver device to communicate with another device within the wireless communications system through at least one portion of multiple links respectively corresponding to multiple predetermined radio frequency bands; and at a first time point when radar is detected in a first channel used by a first link among the multiple links, starting performing a first procedure to make channel management information be received by the other device via one or more other links among the multiple links at any time point when the other device is ready to receive the channel management information, wherein the first channel is one of multiple channels of a first predetermined radio frequency band among the multiple predetermined radio frequency bands, and the other device is not ready to receive the channel management information at the first time point.

At least one embodiment of the present invention provides a wireless transceiver device for performing channel usage management with aid of MLO architecture, where the wireless transceiver device is one of multiple devices within a wireless communications system. The wireless transceiver device may comprise a processing circuit that is arranged to control operations of the wireless transceiver device. The wireless transceiver device may further comprise at least one communications control circuit that is coupled to the processing circuit and arranged to perform communications control, wherein the at least one communications control circuit is arranged to perform wireless communications operations with another device among the multiple devices for the wireless transceiver device. For example, the wireless transceiver device is arranged to communicate with the other device within the wireless communications system through at least one portion of multiple links respectively corresponding to multiple predetermined radio frequency bands; and at a first time point when radar is detected in a first channel used by a first link among the multiple links, the wireless transceiver device is arranged to start performing a first procedure to make channel management information be received by the other device via one or more other links among the multiple links at any time point when the other device is ready to receive the channel management information, wherein the first channel is one of multiple channels of a first predetermined radio frequency band among the multiple predetermined radio frequency bands, and the other device is not ready to receive the channel management information at the first time point.

Preferably, the apparatus may comprise at least one portion (e.g., a portion or all) of the wireless communications system. For example, the apparatus may represent a portion of the wireless communications system, such as the wireless transceiver device (e.g., an AP device or a STA device). In some examples, the apparatus may represent the whole of the wireless communications system.

It is an advantage of the present invention that, through proper design, the present invention method, as well as the associated apparatus such as the wireless transceiver device, can prevent failure of a link corresponding to the 5 gigahertz (GHz) band when radar is detected in a channel of the 5 GHz band, and more particularly, make channel management information be transmitted and received as soon as possible if no link of the other link(s) in the MLO architecture is usable at the moment when the radar is detected, and make the channel management information be transmitted and received in time if any of the other link(s) is usable. In addition, the present invention method and apparatus can enhance the efficiency of the negotiation between the AP device and the non-AP device(s) to keep connection alive and to prevent packet loss in channels of the 5 GHz band. Additionally, the present invention method and apparatus can solve the related art problems without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram of a wireless communications system according to an embodiment of the present invention.
FIG. 2A is a diagram illustrating a dynamic frequency selection (DFS)-based timing control scheme according to an embodiment of the present invention.
FIG. 2B is a diagram illustrating some details of the DFS-based timing control scheme shown in FIG. 2A.
FIG. 3 is a diagram illustrating a setup control scheme for AP and non-AP multi-link devices (MLDs) according to an embodiment of the present invention.
FIG. 4 is a diagram illustrating an effective communications control scheme of a method for performing channel usage management with aid of MLO architecture according to an embodiment of the present invention.
FIG. 5 illustrates a working flow of the method according to an embodiment of the present invention.
FIG. 6 illustrates a channel switching notification control procedure in the working flow shown in FIG. 5 according to an embodiment of the present invention.
FIG. 7 illustrates some implementation details involved with the channel switching notification control procedure shown in FIG. 6 according to an embodiment of the present invention.
FIG. 8 illustrates a traffic identifier (TID) disabling and enabling control procedure in the working flow shown in FIG. 5 according to an embodiment of the present invention.
FIG. 9 illustrates a TID enabling control procedure in the working flow shown in FIG. 5 according to an embodiment of the present invention.
FIG. 10 illustrates a main working flow of the method according to an embodiment of the present invention.
FIG. 11 illustrates a TID-to-link mapping control scheme of the method according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

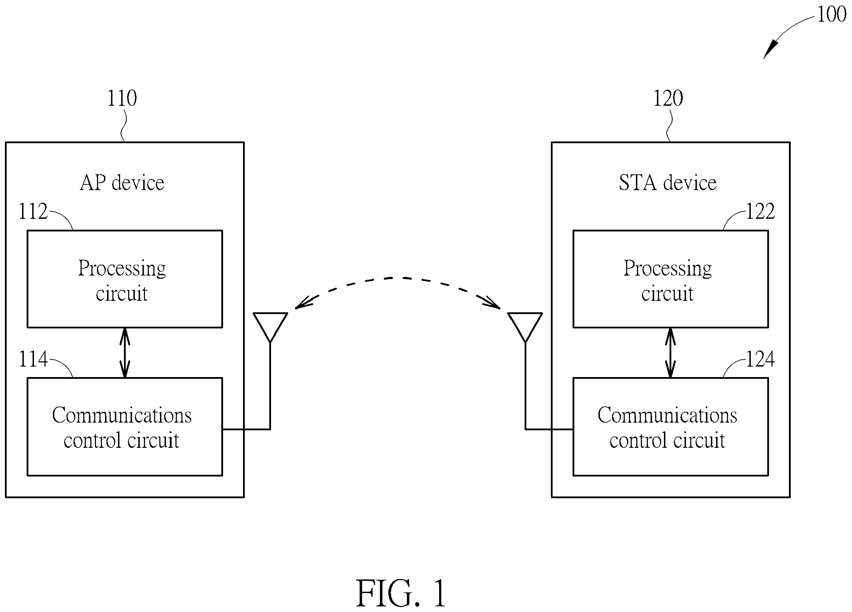

FIG. 1 is a diagram of a wireless communications system 100 according to an embodiment of the present invention. For better comprehension, the wireless communications system 100, as well as any wireless transceiver device therein, may be compatible or back-compatible to one or more versions of the Institute of Electrical and Electronics Engineers (IEEE) 802.11 standards, but the present invention is not limited thereto. The wireless communications system 100 may comprise multiple wireless transceiver devices. As shown in FIG. 1, the multiple wireless transceiver devices within the wireless communications system 100 may comprise the AP device 110 and the STA device 120, where the AP device 110 may comprise a processing circuit 112, at least one communications control circuit (e.g., one or more communications control circuits), which may be collectively referred to as the communications control circuit 114, and at least one antenna (e.g., one or more antennas) of the communications control circuit 114, and the STA device 120 may comprise a processing circuit 122, at least one communications control circuit (e.g., one or more communications control circuits), which may be collectively referred to as the communications control circuit 124, and at least one antenna (e.g., one or more antennas) of the communications control circuit 124.

In the architecture shown in FIG. 1, the processing circuit 112 can be arranged to control operations of the AP device 110 to make the AP device 110 act as at least one AP in the wireless communications system 100, such as multiple APs integrated into the AP device 110, and the communications control circuit 114 can be arranged to perform communications control, and more particularly, perform wireless communications operations with the STA device 120 (or the communications control circuit 124 thereof) for the AP device 110. In addition, the processing circuit 122 can be arranged to control operations of the STA device 120 to make the STA device 120 act as at least one STA in the wireless communications system 100, such as multiple STAs integrated into the STA device 120, and the communications control circuit 124 can be arranged to perform communications control, and more particularly, perform wireless communications operations with the AP device 110 (or the communications control circuit 114 thereof) for the STA device 120.

Preferably, the processing circuit 112 can be implemented by way of at least one processor/microprocessor, at least one random access memory (RAM), at least one bus, etc., and the communications control circuit 114 can be implemented by way of at least one wireless network control circuit and at least one wired network control circuit, but the present invention is not limited thereto. Examples of the AP device 110 may include, but are not limited to: a Wi-Fi router. In addition, the processing circuit 122 can be implemented by way of at least one processor/microprocessor, at least one RAM, at least one bus, etc., and the communications control circuit 124 can be implemented by way of at least one wireless network control circuit, but the present invention is not limited thereto. Examples of the STA device 120 may include, but are not limited to: a multifunctional mobile phone, a laptop computer, an all-in-one computer and a wearable device.

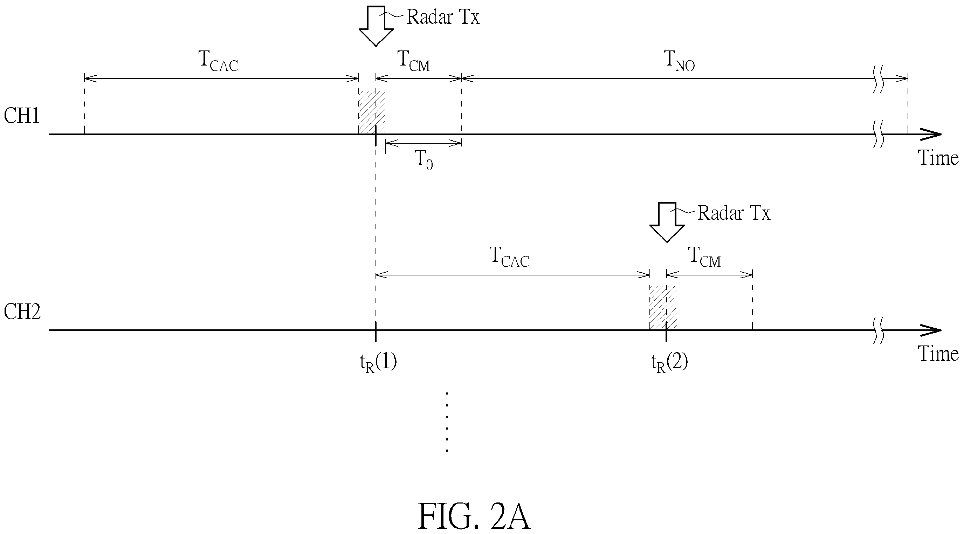

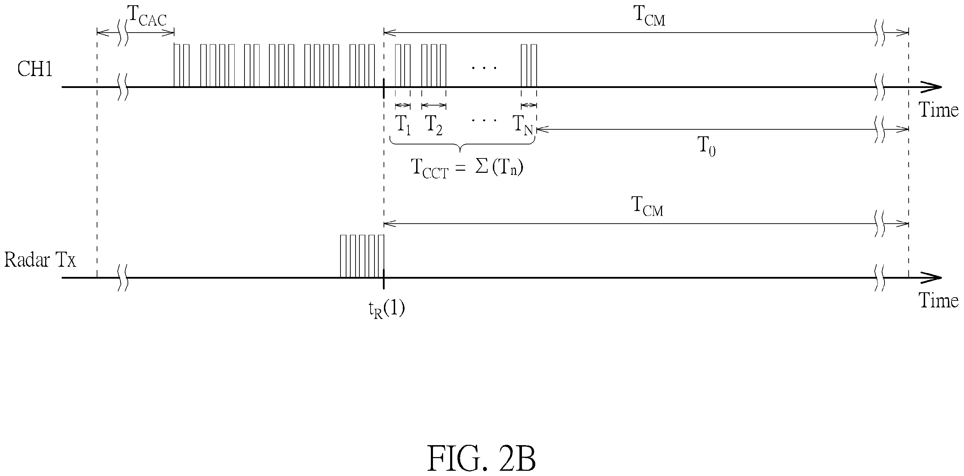

FIG. 2A illustrates a DFS-based timing control scheme according to an embodiment of the present invention, and FIG. 2B illustrates some details of the DFS-based timing control scheme shown in FIG. 2A. For better comprehension, assume that the AP device 110 may operate according to the DFS-based timing control scheme to switch among multiple channels CH1, CH2, etc. in a predetermined radio frequency band such as the 5 GHz band, and the timing of the associated operations may conform to the limitations as defined by the respective predetermined ranges of some predetermined parameters such as a channel availability check time T_{CAC}, a channel move time T_{CM}, a channel closing transmission time T_{CCT}, a non-occupancy period T_{NO}, etc. of DFS related operations, for example, T_{CCT} = Σ(Tₙ) = (T₁ + T₂ + ... + T_{N}) as shown in FIG. 2B, where "N" may be a positive integer, "n" may be an integer in the interval [1, N], and "Σ( )" may represent the summation, but present invention is not limited thereto. Preferably, the AP device 110 may operate according to one or more other control schemes, and the associated operations may vary.

For example, as shown in FIG. 2A, when selecting the channel CH1 for performing wireless communications operations, the AP device 110 may wait for channel availability of the channel CH1 until the channel availability check time T_{CAC} of the channel CH1 has expired. If the channel availability check time T_{CAC} of the channel CH1 has expired and no radar is detected (i.e., no radar is detected to have a power level greater than a predetermined power level threshold) in the channel CH1, the AP device 110 may start communicating with the STA device 120 via the channel CH1 as illustrated with the shaded portion, but radar transmission may be detected in the channel CH1 (labeled "Radar Tx" for brevity) at a time point t_{R}(1). The AP device 110 may select a new channel such as the channel CH2 for new operations, and is configured to end communication in the channel CH1 within the channel move time T_{CM}; before ending the communication in channel CH1, the AP device 110 needs to send a Channel Switch Announcement (CSA) information element (IE) to the STA device 120 through channel CH1 to inform the channel switching is to be performed. It is to be noted that, in DFS operations, total transmission duration is required to be less than the channel closing transmission time T_{CCT}.

Afterwards, the AP device 110 may avoid using the channel CH1 for the non-occupancy period T_{NO}. As a result, the total duration that the channel CH1 is not allowed or arranged for transmission may be greater than or equal to (T_{CAC} + T_{NO}). For example, the AP device 110 may end communication in the channel CH1 immediately after the beginning time point of the channel move time T_{CM} as shown in FIG. 2A to allow the remaining time T₀ to be greater than zero, causing the total duration such as (T_{CAC} + T₀ + T_{NO}) to be greater than (T_{CAC} + T_{NO}). Similarly, when selecting the channel CH2 for performing wireless communications operations, the AP device 110 may wait for channel availability of the channel CH2 until the channel availability check time T_{CAC} of the channel CH2 has expired. If the channel availability check time T_{CAC} of the channel CH2 has expired and no radar is detected (or no radar is detected to have a power level greater than the predetermined power level threshold) in the channel CH2, the AP device 110 may start communicating with the STA device 120 via the channel CH2 as illustrated with the shaded portion, but radar transmission may be detected in the channel CH2 (labeled "Radar Tx" for brevity) at a time point t_{R}(2). As a result, the AP device 110 may select a new channel such as the channel CH3 for new operations, stop using the channel CH2 within the channel move time T_{CM}, and the AP device 110 would avoid using the channel CH2 for the non-occupancy period T_{NO}, where the rest may be deduced by analogy.

Preferably, the channels {CH1, CH2, ...} may be re-written as the channels {CH(1), CH(2), ...}, respectively, and the channel availability check time T_{CAC} may vary and may be re-written as {T_{CAC}(1), T_{CAC}(2), ...} for the channels {CH(1), CH(2), ...}, respectively. For example, the channel availability check time T_{CAC}(n) of the channel CH(n) may be equal to 60 seconds for the case that the radar belongs to a certain type of radar systems, or equal to 10 minutes for the case that the radar belongs to another type of radar systems, where the index "n" may be a positive integer. In addition, the channel move time T_{CM} may be equal to 10 seconds, and the non-occupancy period T_{NO} may be equal to 30 minutes. Once radar is detected in the channel CH(n), the AP device 110 operating according to the DFS-based timing control scheme may need to stop transmission in the channel CH(n), and more particularly, perform re-transmission on a new DFS channel CH(n + 1) without radar detected after the channel availability check time T_{CAC}(n + 1) has expired. The AP device 110 may have tried using N_{DFS} channels CH(1), CH(2), ..., and CH(N_{DFS}) among all channels in the 5 GHz band, and the total duration may be greater than the summation (T_{CAC}(1) + T_{CAC}(2) + ... + T_{CAC}(N_{DFS})) of the respective channel availability check times {T_{CAC}(1), T_{CAC}(2), ..., T_{CAC}(N_{DFS})} of the channels {CH(1), CH(2), ..., CH(N_{DFS})}. As the STA device 120 may fail to receive the CSA IE and fail to switch to the new channel because of it is in a power saving state/mode or a dozing state/mode, the STA device 120 may disconnect and need to re-scan AP(s) again for reconnection. In addition, on-going uplink (UL) and downlink (DL) traffic may be dropped before the channel availability check time T_{CAC} has expired in the new DFS channel CH(n + 1). As will be illustrated in the following embodiments, the AP device 110 may operate efficiently to enhance the overall performance.

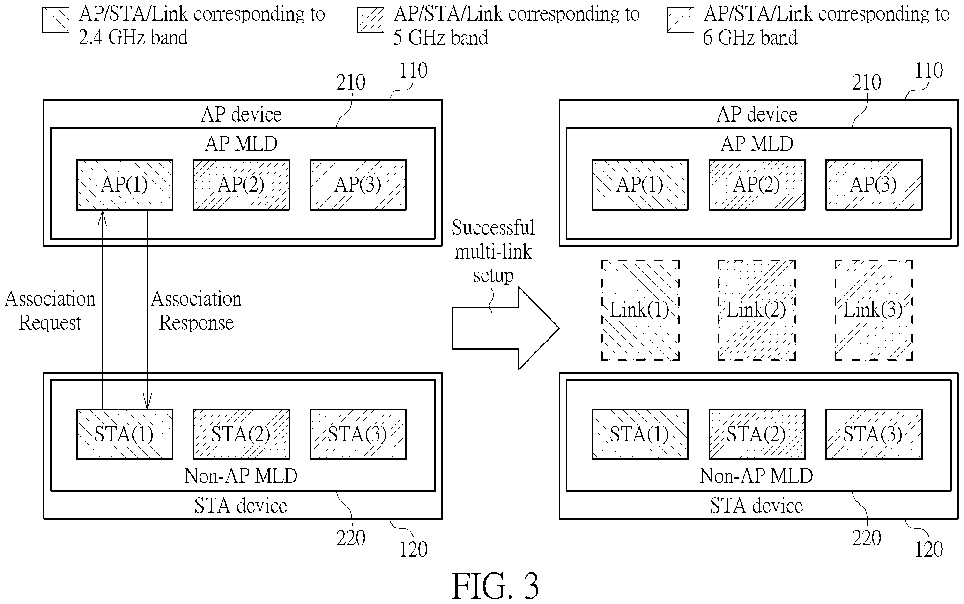

FIG. 3 is a diagram illustrating a setup control scheme for AP and non-AP MLDs according to an embodiment of the present invention. The AP device 110 and the STA device 120 may be configured to set up multiple links such as the links Link(1), Link(2) and Link(3) respectively corresponding to the 2.4 GHz band, the 5 GHz band and the 6 GHz band, and perform channel usage management with aid of MI,O architecture. For example, the AP device 110 may comprise an AP MLD 210 equipped with multiple APs such as the APs AP(1), AP(2) and AP(3) respectively corresponding to the 2.4 GHz band, the 5 GHz band and the 6 GHz band, and the STA device 120 may comprise a non-AP MLD 220 equipped with multiple non-AP STAs such as the STAs STA(1), STA(2) and STA(3) respectively corresponding to the 2.4 GHz band, the 5 GHz band and the 6 GHz band. The STA device 120 may utilize a STA STA(x) corresponding to a radio frequency band among the multiple non-AP STAs, such as the STA STA(1), to send an association request to the AP device 110, and the AP device 110 may utilize an AP AP(x) corresponding to the same radio frequency band among the multiple APs, such as the AP AP(1), to send an association response to the STA device 120, to complete a successful multi-link setup. As a result, the AP device 110 and the STA device 120 may establish the links {Link(1), Link(2), Link(3)} between the APs {AP(1), AP(2), AP(3)} and the STAs {STA(1), STA(2), STA(3)}, respectively.

Based on the MLO architecture shown in FIG. 3, the AP device 110 and the STA device 120 may communicate with each other by using the AP MLD 210 and the non-AP MLD 220. More particularly, the AP device 110 may perform effective communications control to effectively communicate with the STA device 120 in a situation where at least one AP (e.g., the AP(1)) among the APs {AP(1), AP(2), AP(3)} and at least one STA (e.g., the STA STA(1)) among the STAs {STA(1), STA(2), STA(3)} are awake, without performing any ineffective communications in a situation where all of the STAs {STA(1), STA(2), STA(3)} are in the sleep state (e.g., the power saving state/mode or the dozing state/mode), in order to perform channel switching of a MLD link such as the link Link(2) efficiently, where the channel switching may comprise an operation of switching from an original DFS channel to a new channel among all channels {CH1, CH2, ...} of the 5 GHz band. For example, when radar is detected in the original DFS channel, the channel switching of the MLD link is needed. The AP device 110 may send the associated information such as channel management information to the STA device 120 through other MLD link(s) such as the links Link(1) and Link(3), and therefore improve connection maintenances of the link Link(2) corresponding to the 5 GHz band. In addition, the AP device 110 may dynamically map or re-map TID-to-Link mapping relationships for both UL and DL to route 5 GHz band traffic over the other MLD link(s), and therefore improve TID and traffic flow maintenance with the aid of the effective communications control.

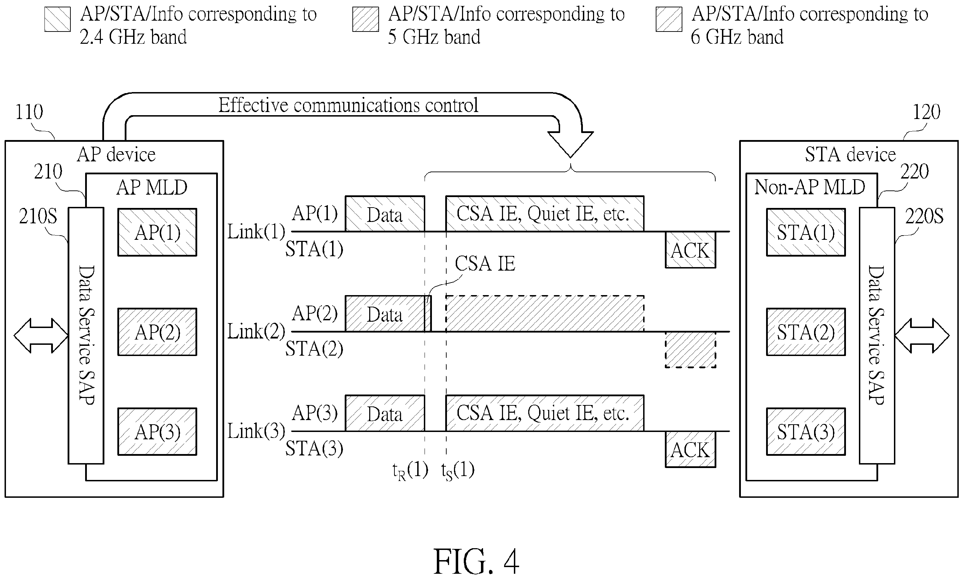

FIG. 4 is a diagram illustrating an effective communications control scheme of a method for performing channel usage management with aid of the MLO architecture according to an embodiment of the present invention. In the MLO architecture shown in FIG. 4, a MLD (e.g., the AP MLD 210 and the non-AP MLD 220) may be a logical entity and may have more than one affiliated STA and have a single medium access control (MAC) service access point (SAP) to logical link control (LLC), which may include one MAC data service. For example, the AP MLD 210 may comprise more than one affiliated STA such as the APs AP(1), AP(2) and AP(3) and the data service SAP 210S, and the non-AP MLD 220 may comprise more than one affiliated STA such as the STAs STA(1), STA(2) and STA(3) and the data service SAP 220S.

As shown in FIG. 4, the AP device 110 may communicate with the STA device 120 via the links Link(1), Link(2) and Link(3) before radar detection at the time point t_{R}(1), and may start performing the effective communications control at the time point t_{R}(1) and start sending the associated information (Info) such as the channel management information to the STA device 120 via one or more links (e.g., links Link(1) and Link(3)) among the links Link(1), Link(2) and Link(3) at the time point ts(1), and the STA device 120 may send acknowledgement (ACK) to the AP device 110 via the one or more links, where the channel management information may comprise the CSAIE and a Quiet IE. For example, the STA device 120 may operate according to a legacy power saving control scheme to enter the power saving state/mode. For another example, the STA device 120 may operate according to a target wake time (TWT) power saving control scheme to enter the dozing state/mode, and more particularly, may be in a TWT non-service period. No matter whether the STA device 120 is in the power saving state/mode or the dozing state/mode, the AP device 110 may perform the effective communications control to make the STA device 120 acquire the new 5 GHz band channel status (e.g., the channel status of the 5 GHz band) efficiently. At time point t_{R}(1), the STA device 120 in the power saving state/mode or the dozing state/mode may be not able to receive the CSA IE through the MLD link such as the link Link(2) and may be not able to receive the CSAIE through the other MLD link(s) such as the links Link(1) and Link(3), and the STA device 120 may be back to awake state to receive the CSA IE from the AP device 110 through the other MLD link(s) such as the links Link(1) and Link(3). For example, the AP device 110 may queue a packet (e.g. the packet carrying the CSAIE and the Quiet IE) to be transmitted with priority. If the STA STA(2) is in the sleep state, transmitting the packet carrying the CSA IE and the Quiet IE through the link Link(2) will not make the STA device 120 receive the CSAIE and the Quiet IE. When detecting or determining that the STAs STA(1) and STA(3) are not in the sleep state, the AP device 110 may transmit the packet carrying the CSAIE and the Quiet IE through the links Link(1) and Link(3) to make the STA device 120 receive the CSA IE and the Quiet IE. In addition, during the channel availability check time T_{CAC}, the DL and UL traffic can be transmitted by the other MLD link(s) such as the links Link(1) and Link(3), to allow the on-going applications (e.g., voice and video streaming applications) to keep transmission. As the AP device 110 can prevent the packet loss, the upper layer software applications running on the STA device 120 will not stop their services.

Preferably, the effective communications control scheme can be applied to the AP device 110 and the STA device 120, and can be implemented by way of driver and/or firmware for both of the AP device 110 and the STA device 120, where no extra hardware component is needed.

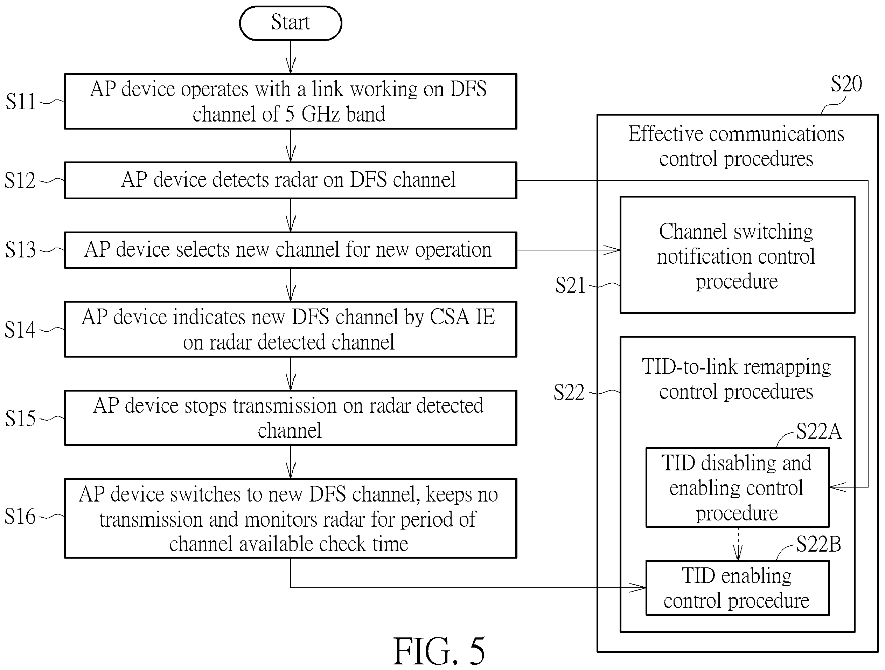

FIG. 5 illustrates a working flow of the method according to an embodiment of the present invention. The method can enhance the efficiency of the negotiation between the AP device 110 and the non-AP STA device(s) such as the STA device 120 to keep connection alive and to prevent packet loss in channels of the 5 GHz band. For example, the AP device 110 may execute Steps S11-S16 and S20 as shown in FIG. 5 to perform the effective communications control.

In Step S11, the AP device 110 operates with a link (e.g., the link Link(2)) working on a DFS channel (e.g., the channel CH1)) of the 5 GHz band.

In Step S12, the AP device 110 detects radar on the DFS channel (e.g., the channel CH1) mentioned in Step S11.

In Step S13, the AP device 110 selects a new channel such as a new DFS channel (e.g., the channel CH2) for new operations.

In Step S14, the AP device 110 indicates the new DFS channel (e.g., the channel CH2) by the CSA IE on the radar detected channel such as the DFS channel (e.g., the channel CH1) mentioned in Step S12.

In Step S15, the AP device 110 stops transmission on the radar detected channel such as the DFS channel (e.g., the channel CH1) mentioned in Step S12.

In Step S16, the AP device 110 switches to the new DFS channel (e.g., the channel CH2), keeps no transmission and monitors radar for a period of the channel availability check time T_{CAC}.

In Step S20, the AP device 110 performs multiple effective communications control procedures, such as respective procedures of Steps S21 and S22, where Step S20 may comprise multiple sub-steps such as Steps S21 and S22.

In Step S21, the AP device 110 performs a channel switching notification control procedure.

In Step S22, the AP device 110 performs multiple TID-to-link remapping control procedures, such as respective procedures of Steps S22Aand S22B, where Step S22 may comprise multiple sub-steps such as Steps S22Aand S22B.

In Step S22A, the AP device 110 performs a TID disabling and enabling control procedure.

In Step S22B, the AP device 110 performs a TID enabling control procedure.

For better comprehension, the method may be illustrated with the working flow shown in FIG. 5, but the present invention is not limited thereto. Preferably, one or more steps may be added, deleted, or changed in the working flow shown in FIG. 5. For example, after the completion of the operations of Step S20 (or its sub-steps such as Steps S21 and S22), the AP device 110 may enable the TID(s) on the new channel such as the new DFS channel (e.g., the channel CH2), and receive and send packets on the new channel. In addition, after performing the operation of Step S13, the AP device 110 may perform the operations of Steps S14 and S21 as shown in FIG. 5, and more particularly, transmit different packets carrying the CSA IE and the Quiet IE via different channels in Steps S14 and S21, respectively. For example, the AP device 110 may transmit a first packet carrying the CSA IE and the Quiet IE through the link Link(2) in Step S14, in order to indicate the new DFS channel (e.g., the channel CH2) by the CSAIE on the radar detected channel such as the DFS channel (e.g., the channel CH1), no matter whether the STA STA(2) corresponding to the link Link(2) is able to receive the CSA IE for the STA device 120 at this moment. For another example, in Step S21, when detecting or determining that the STA corresponding another link (e.g., any of the STAs STA(1) and STA(3) respectively corresponding to the links Link(1) and Link(3)) is not in the sleep state, the AP device 110 may transmit a second packet carrying the CSA IE and the Quiet IE through the other link, to make the STA device 120 receive the CSAIE by using this STA. For brevity, similar descriptions for these embodiments are not repeated in detail here.

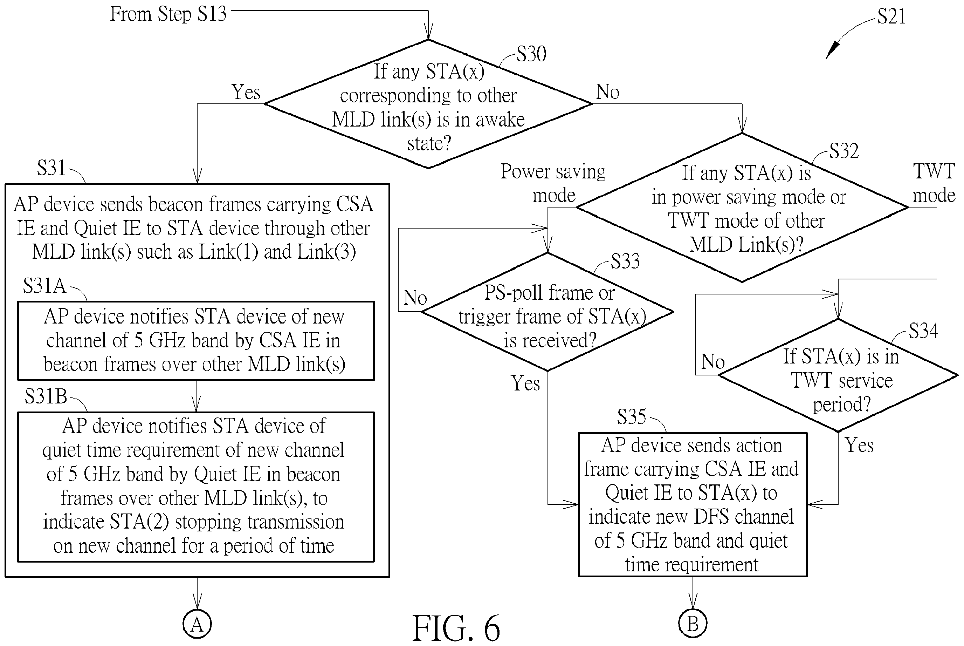

FIG. 6 illustrates the channel switching notification control procedure in the working flow shown in FIG. 5 according to an embodiment of the present invention, where the nodes A and B may be illustrated for better comprehension, but the present invention is not limited thereto. In addition, the AP device 110 may perform the channel switching notification control procedure as shown in FIG. 6 to keep connection alive and to prevent packet loss in the channels of the 5 GHz band.

In Step S30, the AP device 110 determines if any STA STA(x) corresponding to other MLD link(s) such as the links Link(1) and Link(3) is in an awake state. If Yes (e.g., any of the STAs STA(1) and STA(3) is in the awake state), Step S31 is entered; if No (e.g., none of the STAs STA(1) and STA(3) is in the awake state), Step S32 is entered.

In Step S31, the AP device 110 sends beacon frames carrying the CSA IE and the Quiet IE to the STA device 120 through the other MLD link(s) such as Link(1) and Link(3), where Step S31 may comprise multiple sub-steps such as Steps S31A and S31B.

In Step S31A, the AP device 110 notifies the STA device 110 of the new channel (e.g., the channel CH2) of the 5 GHz band by the CSA IE in the beacon frames over the other MLD link(s).

In Step S31B, the AP device 110 notifies the STA device 110 of the quiet time requirement of the new channel (e.g., the channel CH2) of the 5 GHz band by the Quiet IE in the beacon frames over the other MLD link(s), to indicate the STA STA(2) stopping transmission on the new channel for a period of time.

In Step S32, the AP device 110 determines if any STA STA(x) corresponding to the other MLD link(s) such as the links Link(1) and Link(3) is in the power saving mode or the TWT mode of the other MLD link(s). If the STA STA(x) is in the power saving mode, Step S33 is entered; if the STA STA(x) is in the TWT mode, Step S34 is entered.

In Step S33, the AP device 110 determines whether a power-saving (PS)-poll frame or a trigger frame of the STA STA(x) is received by the corresponding AP AP(x). If Yes (e.g., any of the PS-poll frame and the trigger frame of the STA STA(x) is received by the AP AP(x), which may indicate that the STA STA(x) becomes in the awake state), Step S35 is entered; if No (e.g., none of the PS-poll frame and the trigger frame of the STA STA(x) is received by the AP AP(x)), Step S33 is re-entered.

In Step S34, the AP device 110 determines if the STA STA(x) is in a TWT service period. If Yes (e.g., the STA STA(x) is in the TWT service period, which means the STA STA(x) becomes in the awake state), Step S35 is entered; if No, Step S34 is re-entered.

In Step S35, the AP device 110 sends an action frame carrying the CSAIE and the Quiet IE to the STA STA(x) to the STA STA(x) to indicate the new DFS channel (e.g., the channel CH2) of the 5 GHz band and the quiet time requirement.

For better comprehension, the channel switching notification control procedure may be illustrated with the working flow shown in FIG. 6, but the present invention is not limited thereto. Preferably, one or more steps may be added, deleted, or changed in the working flow shown in FIG. 6.

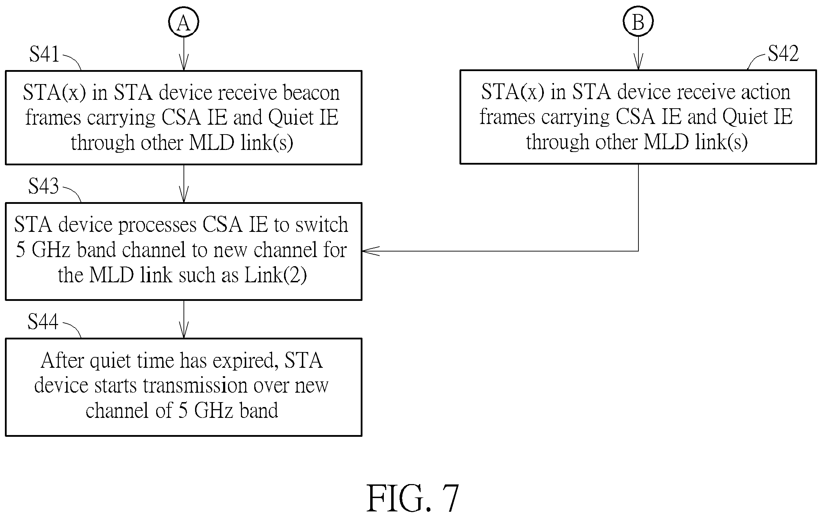

FIG. 7 illustrates some implementation details involved with the channel switching notification control procedure shown in FIG. 6 according to an embodiment of the present invention, where the nodes A and B may be illustrated to correspond to the working flow shown in FIG. 6, but the present invention is not limited thereto.

In Step S41, the STA device 120 utilizes the STA STA(x) in the STA device 120 to receive the beacon frames carrying the CSA IE and the Quiet IE through the other MLD link(s) such as the links Link(1) and Link(3), for determining the new channel (e.g., the channel CH2) of the 5 GHz band and the quiet time requirement of the new channel.

In Step S42, the STA device 120 utilizes the STA STA(x) in the STA device 120 to receive the action frames carrying the CSA IE and the Quiet IE through the other MLD link(s) such as the links Link(1) and Link(3), for determining the new channel (e.g., the channel CH2) of the 5 GHz band and the quiet time requirement of the new channel.

In Step S43, the STA device 120 processes the CSA IE to switch the 5 GHz band channel to the new channel (e.g., the channel CH2) for the MLD link such as Link(2).

In Step S44, after the quiet time indicated by the Quiet IE has expired, the STA device 120 starts transmission over the new channel (e.g., the channel CH2) of the 5 GHz band.

For better comprehension, the method may be illustrated with the working flow shown in FIG. 7, but the present invention is not limited thereto. Preferably, one or more steps may be added, deleted, or changed in the working flow shown in FIG. 7.

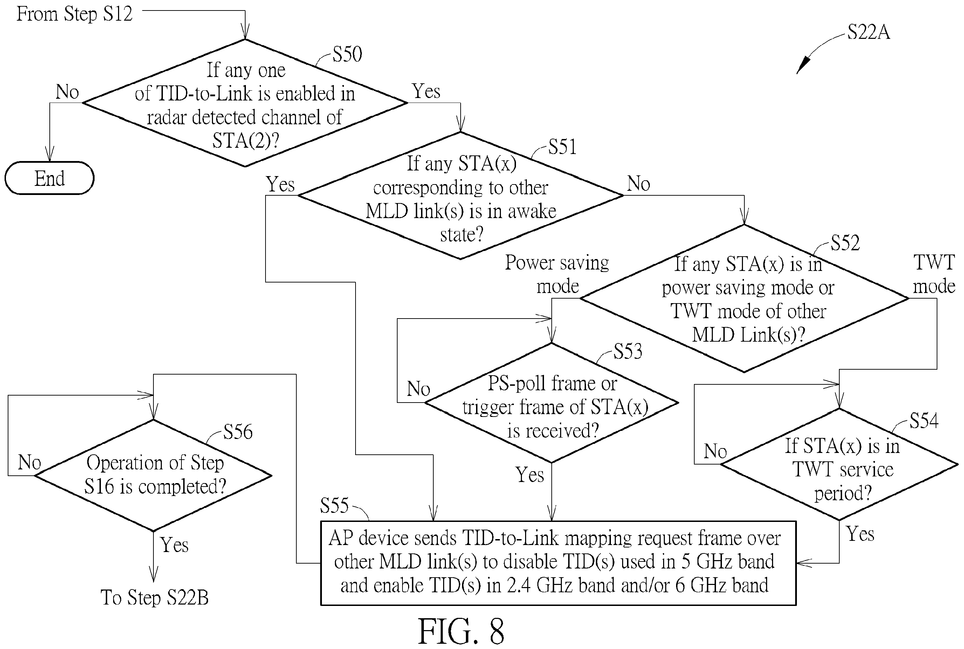

FIG. 8 illustrates the TID disabling and enabling control procedure in the working flow shown in FIG. 5 according to an embodiment of the present invention.

In Step S50, the AP device 110 determines if any one of TID-to-Link is enabled in the radar detected channel (e.g., the channel CH1) of the STA STA(2). If Yes, Step S51 is entered; if No, the working flow shown in FIG. 8 comes to the end.

In Step S51, the AP device 110 determines if any STA STA(x) corresponding to other MLD link(s) such as the links Link(1) and Link(3) is in the awake state. If Yes (e.g., any of the STAs STA(1) and STA(3) is in the awake state), Step S55 is entered; if No (e.g., none of the STAs STA(1) and STA(3) is in the awake state), Step S52 is entered.

In Step S52, the AP device 110 determines if any STA STA(x) corresponding to the other MLD link(s) such as the links Link(1) and Link(3) is in the power saving mode or the TWT mode of the other MLD link(s). If the STA STA(x) is in the power saving mode, Step S53 is entered; if the STA STA(x) is in the TWT mode, Step S54 is entered.

In Step S53, the AP device 110 determines whether a PS-poll frame or a trigger frame of the STA STA(x) is received by the corresponding AP AP(x). If Yes (e.g., any of the PS-poll frame and the trigger frame of the STA STA(x) is received by the AP AP(x), which may indicate that the STA STA(x) becomes in the awake state), Step S55 is entered; if No (e.g., none of the PS-poll frame and the trigger frame of the STA STA(x) is received by the AP AP(x)), Step S53 is re-entered.

In Step S54, the AP device 110 determines if the STA STA(x) is in a TWT service period. If Yes (e.g., the STA STA(x) is in the TWT service period, which means the STA STA(x) becomes in the awake state), Step S55 is entered; if No, Step S54 is re-entered.

In Step S55, the AP device 110 sends a TID-to-Link mapping request frame over the other MLD link(s) to the STA STA(x) to disable the TID(s) used in the 5 GHz band and enable the TID(s) in the 2.4 GHz band and/or the 6 GHz band.

In Step S56, the AP device 110 determines whether the operation of Step S16 is completed. If Yes, Step S22B is entered; if No, Step S56 is re-entered.

For better comprehension, the TID disabling and enabling control procedure may be illustrated with the working flow shown in FIG. 8, but the present invention is not limited thereto. Preferably, one or more steps may be added, deleted, or changed in the working flow shown in FIG. 8.

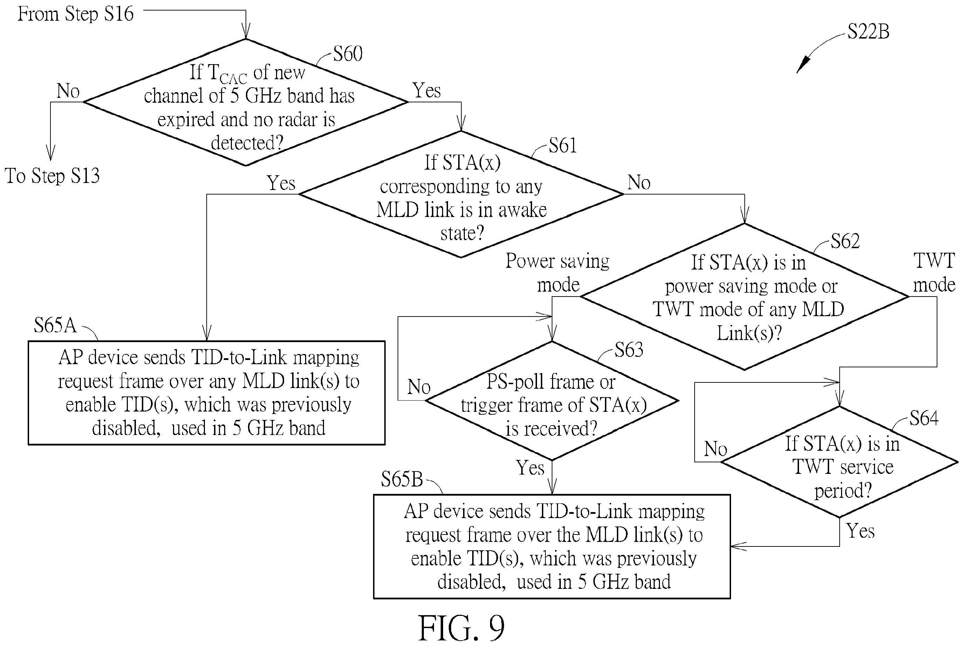

FIG. 9 illustrates the TID enabling control procedure in the working flow shown in FIG. 5 according to an embodiment of the present invention.

In Step S60, the AP device 110 determines if the channel availability check time T_{CAC} of the new channel (e.g., the channel CH2) of the 5 GHz band has expired and no radar is detected in the new channel. If Yes, Step S61 is entered; if No, Step S13 is re-entered.

For example, during executing Step S16 in the working flow shown in FIG. 5, if the channel availability check time T_{CAC} of the new channel (e.g., the channel CH2) of the 5 GHz band has not expired and no radar is detected in the new channel, the AP device 110 may continue monitoring the new channel to determine whether no radar is detected in the new channel, until the channel availability check time T_{CAC} of the new channel has expired; and if the channel availability check time T_{CAC} of the new channel (e.g., the channel CH2) of the 5 GHz band has not expired and radar is detected in the new channel, the AP device 110 may execute Step S13 immediately to re-select a new channel. As a result, at the moment when Step S60 is entered, it is true that the channel availability check time T_{CAC} of the new channel has expired, but the present invention is not limited thereto. Preferably, the AP device 110 may be arranged to start monitoring the new channel in Step S16 without waiting until the channel availability check time T_{CAC} of the new channel has expired, and therefore, at the moment when Step S60 is entered, it is unsure that the channel availability check time T_{CAC} of the new channel has expired, where the working flow shown in FIG. 9 may vary correspondingly.

In Step S61, the AP device 110 determines if the STA STA(x) corresponding to any MLD link (e.g., any link among the links Link(1), Link(2) and Link(3)) is in the awake state. If Yes (e.g., any of the STAs STA(1), STA(2) and STA(3) is in the awake state), Step S65A is entered; if No (e.g., none of the STAs STA(1), STA(2) and STA(3) is in the awake state), Step S62 is entered.

In Step S62, the AP device 110 determines if the STA(s) STA(x) corresponding to any MLD link(s) (e.g., one or more links among the links Link(1), Link(2) and Link(3)) is in the power saving mode or the TWT mode of the aforementioned any MLD link(s). If the STA STA(x) is in the power saving mode, Step S63 is entered; if the STA STA(x) is in the TWT mode, Step S64 is entered.

In Step S63, the AP device 110 determines whether a PS-poll frame or a trigger frame of the STA STA(x) is received by the corresponding AP AP(x). If Yes (e.g., any of the PS-poll frame and the trigger frame of the STA STA(x) is received by the AP AP(x), which may indicate that the STA STA(x) becomes in the awake state), Step S65B is entered; if No (e.g., none of the PS-poll frame and the trigger frame of the STA STA(x) is received by the AP AP(x)), Step S63 is re-entered.

In Step S64, the AP device 110 determines if the STA STA(x) is in a TWT service period. If Yes (e.g., the STA STA(x) is in the TWT service period, which means the STA STA(x) becomes in the awake state), Step S65B is entered; if No, Step S64 is re-entered.

In Step S65A, the AP device 110 sends a TID-to-Link mapping request frame over any MLD link(s) (e.g., the MLD link as mentioned in Step S61, such as any link among the links Link(1), Link(2) and Link(3)) to the STA STA(x) to enable the TID(s), which was (or were) previously disabled, used in the 5 GHz band.

In Step S65B, the AP device 110 sends a TID-to-Link mapping request frame over the MLD link(s) (e.g., the MLD link(s) as mentioned in Step S62, such as one or more links among the links Link(1), Link(2) and Link(3)) to the STA STA(x) to enable the TID(s), which was (or were) previously disabled, used in the 5 GHz band.

For better comprehension, the TID enabling control procedure may be illustrated with the working flow shown in FIG. 9, but the present invention is not limited thereto. Preferably, one or more steps may be added, deleted, or changed in the working flow shown in FIG. 9. For example, in a situation where the AP device 110 is arranged to start monitoring the new channel (e.g., the channel CH2) in Step S16 without waiting until the channel availability check time T_{CAC} of the new channel has expired, a monitoring and error handling procedure may be inserted between Steps S60 and S13 on the partial working flow corresponding to the determination result "No" of Step S60. In the monitoring and error handling procedure, if the channel availability check time T_{CAC} of the new channel (e.g., the channel CH2) of the 5 GHz band has not expired and no radar is detected in the new channel, the AP device 110 may continue monitoring the new channel to determine whether no radar is detected in the new channel, where Step S60 is re-entered; and if the channel availability check time T_{CAC} of the new channel (e.g., the channel CH2) of the 5 GHz band has not expired and radar is detected in the new channel, the AP device 110 may re-select a new channel, where Step S13 is re-entered. For brevity, similar descriptions for these embodiments are not repeated in detail here.

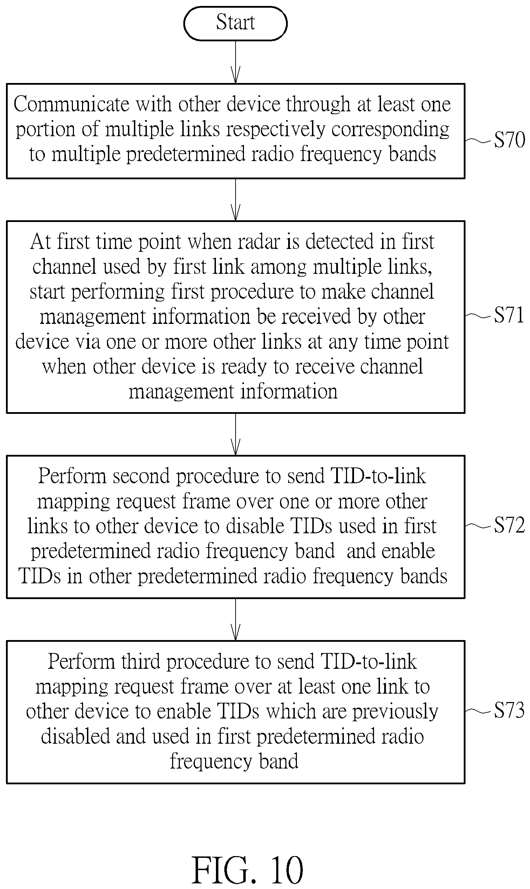

FIG. 10 illustrates a main working flow of the method according to an embodiment of the present invention, where the method may be applied to any wireless transceiver device of the multiple wireless transceiver devices (e.g., the AP device 110 and the STA device 120) within the wireless communications system 100, and may comprise the operations of Steps S70-S73. In addition, the wireless transceiver device may perform multiple procedures regarding the effective communications channel control, such as the channel switching notification control procedure, the TID disabling and enabling control procedure and the TID enabling control procedure in the working flow shown in FIG. 5.

In Step S70, the wireless transceiver device (e.g., the AP device 110) may communicate with another device (e.g., the STA device 120) within the wireless communications system 100 through at least one portion (e.g., a portion or all) of multiple links respectively corresponding to multiple predetermined radio frequency bands. For example, the multiple links may represent multiple MLD links, such as the links Link(1), Link(2) and Link(3) respectively corresponding to the 2.4 GHz band, the 5 GHz band and the 6 GHz band as illustrated in FIG. 3, where the wireless transceiver device (e.g., the AP device 110) is configured to be equipped with multiple APs respectively corresponding to the multiple predetermined radio frequency bands, such as the APs AP(1), AP(2) and AP(3) respectively corresponding to the 2.4 GHz band, the 5 GHz band and the 6 GHz band, and the other device (e.g., the STA device 120) is configured to be equipped with multiple non-AP STAs respectively corresponding to the multiple predetermined radio frequency bands, such as the STAs STA(1), STA(2) and STA(3) respectively corresponding to the 2.4 GHz band, the 5 GHz band and the 6 GHz band.

In Step S71, at a first time point when radar is detected in a first channel (e.g., the channel CH1 as illustrated in FIG. 2A, or the channel CH(1) in some embodiments) used by a first link (e.g., a first MLD link among the multiple MLD links, such as the link Link(2)) among the multiple links, such as the time point t_{R}(1) as illustrated in FIG. 4, the wireless transceiver device (e.g., the AP device 110) may start performing a first procedure among the multiple procedures, such as the channel switching notification control procedure, to make the channel management information be received by the other device (e.g., the STA device 120) via one or more other links (e.g., one or more other MLD links among the multiple MLD links, such as the links Link(1) and Link(3)) among the multiple links at any time point ts(1) when the other device is ready to receive the channel management information. The first channel mentioned above may be one of multiple channels (e.g., the channels {CH1, CH2, ...} as illustrated in FIG. 2A, or the channels {CH(1), CH(2), ...} in some embodiments) of a first predetermined radio frequency band (e.g., the 5 GHz band) among the multiple predetermined radio frequency bands.

For example, when the other device (e.g., the STA device 120) is in the awake state (e.g., any of the STAs STA(1) and STA(3) is in the awake state), the other device may be ready to receive the channel management information at the first time point such as the time point t_{R}(1), and there may be merely a small or negligible gap (ts(1) - t_{R}(1)) between the time point t_{R}(1) and the time point ts(1) when the other device receives the channel management information via the one or more other links, which means the channel management information such as the CSA IE and the Quiet IE may be transmitted via the one or more other links immediately after the time point t_{R}(1), but the present invention is not limited thereto. For another example, when the other device (e.g., the STA device 120) is in a non-awake state (e.g., none of the STAs STA(1), STA(2) and STA(3) is in the awake state), the other device may be not ready to receive the channel management information at the first time point such as the time point t_{R}(1), and there may be a significant gap (t_{S}(1) - t_{R}(1)) between the time point t_{R}(1) and the time point ts(1) when the other device receives the channel management information via the one or more other links, which means the channel management information such as the CSA IE and the Quiet IE may be transmitted via the one or more other links later after the other device becomes in the awake state.

In Step S72, the wireless transceiver device (e.g., the AP device 110) may perform a second procedure among the multiple procedures, such as the TID disabling and enabling control procedure, to send a TID-to-link mapping request frame over the one or more other links (e.g., the links Link(1) and Link(3)) to the other device (e.g., the STA device 120) to disable one or more TIDs used in the first predetermined radio frequency band (e.g., the 5 GHz band) and enable one or more TIDs in one or more other predetermined radio frequency bands (e.g., the 2.4 GHz band and the 6 GHz band) among the multiple predetermined radio frequency bands.

In Step S73, when the other device (e.g., the STA device 120) is in the awake state, the wireless transceiver device (e.g., the AP device 110) may perform a third procedure among the multiple procedures, such as the TID enabling control procedure, to send a TID-to-link mapping request frame over at least one link (e.g., the links Link(1), Link(2) and/or Link(3)) to the other device to enable the one or more TIDs which are previously disabled and used in the first predetermined radio frequency band (e.g., the 5 GHz band).

Based on the MLO architecture, the wireless transceiver device may perform the first procedure to prevent any error of failing to receive the channel management information by the other device due to the other device being in the non-awake state, and more particularly, perform at least one other procedure such as the second procedure and the third procedure to achieve the TID-to-link remapping control, in order to enhance the overall performance. For brevity, similar descriptions for this embodiment are not repeated in detail here.

For better comprehension, the method may be illustrated with the working flow shown in FIG. 10, but the present invention is not limited thereto. Preferably, one or more steps may be added, deleted, or changed in the working flow shown in FIG. 10. For example, the operations of the first procedure may be the same as or similar to that of the channel switching notification control procedure as illustrated with the working flow shown in FIG. 6, the operations of the second procedure may be the same as or similar to that of the TID disabling and enabling control procedure as illustrated with the working flow shown in FIG. 8, and the operations of the third procedure may be the same as or similar to that of the TID enabling control procedure as illustrated with the working flow shown in FIG. 9. For brevity, similar descriptions for these embodiments are not repeated in detail here.

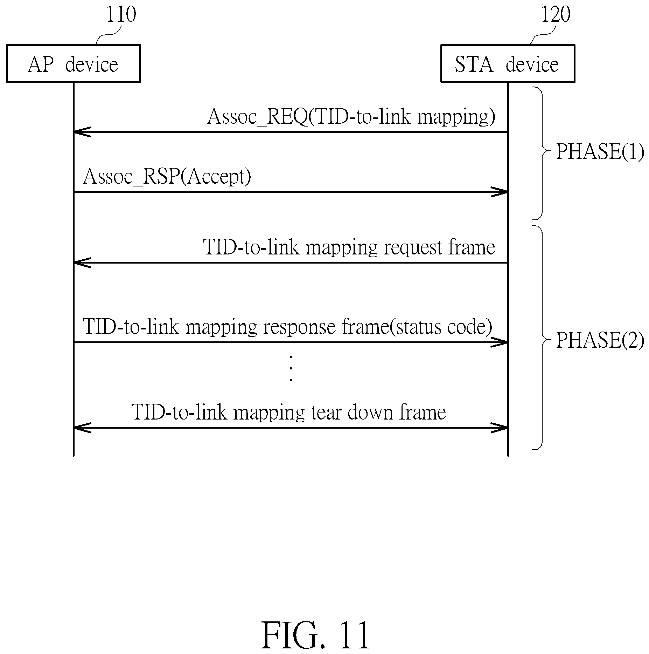

FIG. 11 illustrates a TID-to-link mapping control scheme of the method according to an embodiment of the present invention. The AP device 110 and the STA device 120 may perform negotiation of TID-to-link mapping by using an association request frame Assoc_REQ and an association response frame Assoc_RSP, in order to complete the TID-to-link mapping setup, but the present invention is not limited thereto. For the case of multi-link re-setup, the association request frame Assoc_REQ and the association response frame Assoc_RSP may be regarded as the reassociation request frame Assoc _REQ and the reassociation response frame Assoc_RSP, respectively.

In a phase PHASE(1), the STA device 120 may send the (re)association request frame Assoc_REQ carrying a TID-to-link mapping element, where the TID-to-link mapping element may indicate the requested TID-to-link mapping (labeled "Assoc_REQ(TID-to-link mapping)" for brevity). In response to the (re)association request frame Assoc_REQ, the AP device 110 may send the (re)association response frame Assoc_RSP to indicate a determination result such as "Accept" (labeled "Assoc_RSP(Accept)" for brevity), but the present invention is not limited thereto. For example, the non-AP MLD 220 within the STA device 120 and the AP MLD 210 within the AP device 110 may communicate with each other by using the (re)association request frame Assoc _REQ and the (re)association response frame Assoc _RSP, and the associated operations related to TID-to-Link mapping in the process of communicating by using the (re)association request frame Assoc _REQ and the (re)association response frame Assoc_RSP may comprise:
(1) in Step #1, the non-AP MLD 220 may carry TID-to-Link mapping related information in the (re)association request frame Assoc_REQ;
(2) in Step #2, after receiving the (re)association request frame Assoc_REQ, no matter what the determination result is, the AP MLD 210 may carry the TID-to-link mapping element in the (re)association response frame Assoc_RSP;
(3) in Step #3, the AP MLD 210 may perform subsequent operations according to the determination result such as the TID-to-Link mapping result in the AP MLD 210 as determined in Step #2;
(4) in Step #4, assuming that the above Steps are completed and the non-AP MLD 220 needs to change the TID-to-Link mapping later, at this moment, the non-AP MLD 220 may use a first Action frame to carry the TID-to-Link mapping information to communicate with the AP MLD 210; and
(5) in Step #5, after receiving the first Action frames of the non-AP MLD 220, the AP MLD 210 may reply the relevant Action frame response such as a second Action frame, where the second Action frame may have a status code (e.g., the Status Code as shown in Tables 1 and 2 below), for replying the status with regard to the request of TID-to-Link to the non-AP MLD 220, where the status code may be equal to any of the values of 133 and 134;
where the operations of Steps #4 and #5 may be performed in a phase PHASE(2).

**Table 1**

| **Order** | **Information** |
|---|---|
| 1 | Category |
| 2 | Protected EHT Action |
| 3 | Dialog Token |
| 4 | Status Code |
| 5 | TID-To-Link Mapping |
| | e.g., TID-To-Link Mapping element |

**Table 2**

| **Status Code** | **Name** | **Meaning** |
|---|---|---|
| 133 | DENIED_TID_TO_LINK_MAPPING | Request denied because the requested TID-to-link mapping is unacceptable. |
| 134 | PREFERRED_TID_TO_LINK_MAPPING_SUGGESTED | Preferred TID-to-link mapping suggested. |

Table 1 illustrates an example of a TID-To-Link Mapping Response frame Action field format, and Table 2 illustrates an example of the Status Code shown in Table 1, where the TID-To-Link Mapping Response frame Action field format may conform to at least one version of the IEEE 802.11 standards, but the present invention is not limited thereto. Regarding the TID-To-Link Mapping Response frame Action field format such as the format of the Action field in a TID-to-link mapping response frame, the information such as the Category (e.g., a Category code), the Protected Extremely High Throughput (EHT) Action (e.g., an Action code), the Dialog Token, the Status Code and the TID-To-Link Mapping (e.g., a TID-To-Link Mapping element) may be arranged in the order shown in Table 1. In addition, the Status Code may be equal to DENIED_TID_TO_LINK_MAPPING (e.g., the value of 133), for indicating that the request is denied because the requested TID-to-link mapping is unacceptable to the AP device 110, or PREFERRED_TID_TO_LINK_MAPPING_SUGGESTED (e.g., the value of 134), for indicating the preferred TID-to-link mapping that is suggested by the AP device 110.

As shown in the lower half of FIG. 11, in the phase PHASE(2), the STA device 120 may send the TID-to-link mapping request frame (e.g., the first Action frame) to the AP device 110, and the AP device 110 may send the TID-to-link mapping response frame (e.g., the second Action frame) carrying the status code to the STA device 120. Afterward, AP device 110 and the STA device 120 may exchange TID-to-link mapping tear down frames, and more particularly, send TID-to-link mapping tear down frames to each other.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing channel usage management with aid of multi-link operation, in the following also referred to as MLO, architecture, the method being applicable to a wireless transceiver device within a wireless communications system, the method comprising:
utilizing the wireless transceiver device to communicate with another device within the wireless communications system through at least one portion of multiple links respectively corresponding to multiple predetermined radio frequency bands (S70); and
at a first time point when radar is detected in a first channel used by a first link among the multiple links, starting performing a first procedure to make channel management information be received by the other device via one or more other links among the multiple links at any time point when the other device is ready to receive the channel management information (S71), wherein the first channel is one of multiple channels of a first predetermined radio frequency band among the multiple predetermined radio frequency bands, and the other device is not ready to receive the channel management information at the first time point.

2. A wireless transceiver device (110), for performing channel usage management with aid of multi-link operation, in the following also referred to as MLO, architecture, the wireless transceiver device (110) being one of multiple devices within a wireless communications system, the wireless transceiver device (110) comprising:
a processing circuit (112), arranged to control operations of the wireless transceiver device (110); and
at least one communications control circuit (114), coupled to the processing circuit (112), arranged to perform communications control, wherein the at least one communications control circuit (114) is arranged to perform wireless communications operations with another device (120) among the multiple devices for the wireless transceiver device (110);
wherein:
the wireless transceiver device (110) is arranged to communicate with the other device (120) within the wireless communications system through at least one portion of multiple links respectively corresponding to multiple predetermined radio frequency bands; and
at a first time point when radar is detected in a first channel used by a first link among the multiple links, the wireless transceiver device (110) is arranged to start performing a first procedure to make channel management information be received by the other device (120) via one or more other links among the multiple links at any time point when the other device (120) is ready to receive the channel management information, wherein the first channel is one of multiple channels of a first predetermined radio frequency band among the multiple predetermined radio frequency bands, and the other device (120) is not ready to receive the channel management information at the first time point.

3. The method of claim 1 or the wireless transceiver device (110) of claim 2, wherein the wireless transceiver device (110) is an access point, in the following also referred to as AP, device, and the other device (120) is a station, in the following also referred to as STA, device.

4. The method of claim 1 or 3, or the wireless transceiver device (110) of claim 2 or 3, wherein the wireless transceiver device (110) is arranged to perform multiple procedures regarding channel control, and the first procedure is one of the multiple procedures.

5. The method of claim 1, 3 or 4, or the wireless transceiver device (110) of any one of claims 2 to 4, wherein the wireless transceiver device (110) is arranged to perform the first procedure to prevent any error of failing to receive the channel management information by the other device (120) due to the other device (120) being in a non-awake state, wherein the channel management information comprises a channel switch announcement, in the following also referred to as CSA, information element, in the following also referred to as IE, and a quiet IE.

6. The method of any one of claims 1 and 3 to 5, or the wireless transceiver device (110) of any one of claims 2 to 5, wherein the multiple links represent multiple multi-link device, in the following also referred to as MLD, links, the first link represents a first MLD link among the multiple MLD links, and the one or more other links represent one or more other MLD links among the multiple MLD links, wherein the wireless transceiver device (110) is configured to be equipped with multiple APs respectively corresponding to the multiple predetermined radio frequency bands, and the other device (120) is configured to be equipped with multiple non-AP STAs respectively corresponding to the multiple predetermined radio frequency bands; and the first procedure comprises:
among the multiple non-AP STAs, determining if any non-AP STA corresponding to the one or more other MLD links is in an awake state, wherein none of one or more non-AP STAs corresponding to the one or more other MLD links is in the awake state; and
after any STA among the one or more non-AP STAs becomes in the awake state, sending an action frame carrying the channel management information to the any STA to indicate a new channel among the multiple channels, for performing channel switching.

7. The method or the wireless transceiver device (110) of claim 6, wherein at least one possible mode of the any STA among the one or more non-AP STAs comprises a power saving mode; and the first procedure further comprises:
in response to none of one or more non-AP STAs corresponding to the one or more other MLD links being in the awake state, determining if the any STA is in the power saving mode; and
in response to the any STA being in the power saving mode, determining whether a power-saving, in the following also referred to as PS, -poll frame or a trigger frame of the any STA is received by a corresponding AP among the multiple APs;
wherein in response to any of the PS-poll frame and the trigger frame of the any STA being received by the corresponding AP, an operation of sending the action frame carrying the channel management information to the any STA is performed.

8. The method or the wireless transceiver device (110) of claim 6 or 7, wherein at least one possible mode of the any STA among the one or more non-AP STAs comprises a target wake time, in the following also referred to as TWT, mode; and the first procedure further comprises:
in response to none of one or more non-AP STAs corresponding to the one or more other MLD links being in the awake state, determining if the any STA is in the TWT mode; and
in response to the any STA being in the TWT mode, determining if the any STA is in a TWT service period;
wherein in response to the any STA being in the TWT service period, an operation of sending the action frame carrying the channel management information to the any STA is performed.

9. The method of any one of claims 1 and 3 to 8, or the wireless transceiver device (110) of any one of claims 2 to 8, wherein the multiple links represent multiple MLD links, the first link represents a first MLD link among the multiple MLD links, and the one or more other links represent one or more other MLD links among the multiple MLD links, wherein the wireless transceiver device (110) is configured to be equipped with multiple APs respectively corresponding to the multiple predetermined radio frequency bands, and the other device (120) is configured to be equipped with multiple non-AP STAs respectively corresponding to the multiple predetermined radio frequency bands; and the wireless transceiver device (110) is arranged to perform a second procedure (S72), wherein the second procedure comprises:
among the multiple non-AP STAs, determining if a first STA corresponding to the first predetermined radio frequency band is set with a traffic identifier, in the following also referred to as TID, -to-link mapping relationship in the first channel;
in response to the first STA corresponding to the first predetermined radio frequency band being set with the TID-to-link mapping relationship in the first channel, among the multiple non-AP STAs, determining if any non-AP STA corresponding to the one or more other MLD links is in an awake state, wherein none of one or more non-AP STAs corresponding to the one or more other MLD links is in the awake state; and
after any STA among the one or more non-AP STAs becomes in the awake state, sending a TID-to-link mapping request frame over the one or more other MLD links to the any STA to disable one or more TIDs used in the first predetermined radio frequency band and enable one or more TIDs in one or more other predetermined radio frequency bands among the multiple predetermined radio frequency bands.

10. The method of any one of claims 1 and 3 to 9, or the wireless transceiver device (110) of any one of claims 2 to 9, wherein the multiple links represent multiple MLD links, the first link represents a first MLD link among the multiple MLD links, and the one or more other links represent one or more other MLD links among the multiple MLD links, wherein the wireless transceiver device (110) is configured to be equipped with multiple APs respectively corresponding to the multiple predetermined radio frequency bands, and the other device (120) is configured to be equipped with multiple non-AP STAs respectively corresponding to the multiple predetermined radio frequency bands; and the wireless transceiver device (110) is arranged to perform at least one other procedure (S73), wherein the at least one other procedure comprises:
determining if a channel availability check time of a new channel among the multiple channels has expired and no radar is detected in the new channel;
in response to the channel availability check time of the new channel among the multiple channels having expired and no radar being detected in the new channel, among the multiple non-AP STAs, determining if any non-AP STA corresponding to any MLD link is in an awake state; and
if the any non-AP STA corresponding to the any MLD link is in the awake state, sending a TID-to-link mapping request frame over the any MLD link to the any non-AP STA corresponding to the any MLD link to enable one or more TIDs which are previously disabled and used in the first predetermined radio frequency band, otherwise, after at least one non-AP STA corresponding to at least one MLD link becomes in the awake state, sending a TID-to-link mapping request frame over the at least one MLD link to the at least one STA to enable the one or more TIDs which are previously disabled and used in the first predetermined radio frequency band.
